# EUROPEAN PATENT APPLICATION

(11) **EP 0 551 049 A1**
(43) Date of publication of application: **14.07.1993**
(21) Application number: 92610086.8
(22) Date of filing: 18.12.1992
(51) Int. Cl.: B65G 17/48, B65G 47/244

(54) **Conveyor for hanger-suspended clothing and the use hereof**

(30) Priority: 09.01.1992 DK 32/92
(71) Applicant: DANSK VASKERI TEKNIK A/S, DK-3600 Frederikssund (DK)
(72) Inventor: Larsen, Mogens Erup, DK-3600 Frederikssund (DK)
(74) Representative: Lund, Preben

(57) **Abstract**

A conveyor for hanger-suspended items comprises at least one rotatable conveyor worm (1, 1') on which the hangers (2a-2d) are in engagement with the thread of the conveyor worm. A section of the conveyor worm is replaced by a wire-formed screw or spiral (3) which is surrounded by a housing (5) with a through-going bore (6) and a downwardly-facing, through-going slot (7).

It is hereby achieved that the hangers, while being transported forwards, can be turned from a transverse position to a longitudinal position and back again to the transverse position in relation to the direction of transport.

## Description

### Background of the invention

The invention relates to a conveyor of the type as disclosed in the preamble to claim 1, and which is often used in connection with the conveyance of clothing hung on hangers in laundries and dry-cleaning establishments etc.

From German patent applications no. 2 852 732 and no. 1 214 611 there are known suspended worm conveyors for hung clothing and the like, which is conveyed between different positions or apparatus, e.g. in a laundry.

In modern laundries which handle smocks and other clothing, for example for use in institutions and the like, each item is provided with an identification mark which can be in the form of a number, a bar-code mark, an electronic transponder or the like, which is sewn on or into the item of clothing. Among other things, this identification mark is used in connection with the sorting of the clothing, so that after being washed the individual items end up at the correct user. It is therefore necessary to read or scan the identification mark one or more times during the process, e.g. while the item of clothing is still hung.

### Advantages of the invention

The conveyor according to the invention, and with the features as characterized in claim 1, alleviates possible problems in connection with the reading of the identification mark during conveyance, in that the conveyor has an arrangement which enables the suspended item to be turned during the forwards movement of the conveyor, ordinarily from a transverse position to a longitudinal position in relation to the direction of transport, so that the identification mark can easily be read or scanned. The reading or the scanning thus takes place during the forwards transport, and without the individual items having to be halted or slowed down for the reading. Moreover, it is achieved that one is able to get closer to the identification mark for the reading, which is a great advantage as this ensures a more sure reading or scanning. There also exists scanning equipment which requires that the scanning element is relatively close to the identification mark, and this can be achieved without problems with the conveyor according to the invention. It is also avoided that the individual items shield one another when the reading or scanning is to be carried out.

By configuring the conveyor according to the invention as characterized in claim 2, it is possible at any time during the course of conveyance to position the arrangement in the place or places where it is desired to turn the conveyed items for reading or scanning, and thus it is possible to organize the plant completely in accordance with requirements.

By configuring the conveyor according to the invention as characterized in claim 3, it is achieved that no problems are encountered when, after being turned, the items are again transferred for further conveyance on the conveyor worm, and that this takes place continuously without interruptions and without jerky movements, and naturally without creating any disturbing noise.

By configuring the conveyor according to the invention as characterized in claim 4 or 5, the control and the turning of the items which are suspended on a hook or a hanger is effected uniformly and smoothly, and without any undesirable swinging or twisting of the suspended items. The items are simply controlled in smooth movements from the transverse position to the longitudinal position in relation to the direction of conveyance, and back again to the transverse position without any delay whatsover of the forwards movement of the conveyor. In the longitudinal position, the suspended items glide smoothly forwards and are thus accessible for any form of reading or scanning element, which in this position can be placed quite close to the suspended items and carry out an error-free reading or scanning.

By configuring the conveyor according to the invention as characterized in claim 6, a simple and precise manner is provided for turning the hook or the hanger back to the normal position, usually the transverse position, for further transport on the conveyor.

By configuring the conveyor according to the invention as characterized in claim 7, the possibility is provided in a simple manner of inserting an arrangement according to the invention at any place whatsoever in a worm conveyor. The mounting is effected in a simple manner, and thus the arrangement according to the invention does not require special suspension elements.

The configuration of the conveyor according to the invention as characterized in claim 8 provides a robust and reliable construction which is capable of transferring driving power from one conveyor worm to the next. Consequently, a conveyor in which a wire-formed worm or spiral according to the invention has been inserted functions in practice like a continuous worm conveyor, i.e. it is sufficient to have a drive motor at the one end of the conveyor.

The invention has been developed especially for use in connection with laundries or dry-cleaning establishments which handle hanger-suspended clothing as disclosed in claim 9.

### The drawing

An example embodiment according to the invention is shown in the drawing and explained in more detail in the following, in that
- fig. 1: shows the conveyor according to the invention seen from the side,
- fig. 2: shows the same conveyor seen from above and in the direction II-II in fig. 3, and
- fig. 3: shows a section through the conveyor seen in the direction III-III in fig. 1.

### Description of the example embodiment

The drawing shows a section of a conveyor according to the invention, and with a wire hanger or hook 2 shown in four different positions 2a-2d while the hook or hanger passes that part of the conveyor where it is turned in relation to the direction of transport.

The invention will now be described in connection with the transport of hanger-suspended clothing in a laundry, but it will be obvious to those familiar with the art that the conveyor according to the invention will be able to be used with any form of transport of items suspended on hooks or on wire hangers.

A commonly-known conveyor worm, e.g. made of synthetic material, is shown divided into two worms 1 and 1', between which there is inserted a wire-formed screw or spiral 3 which is in firm engagement with the conveyor worms 1 and 1', so that the torque from the driving end is transferred further by the wire screw 3. This firm engagement is accomplished, for example, by the wire screw, which for example can be made of spring steel or stainless steel of a thickness of 4-8 mm, being engaged in the track 9, 10 in the conveyor worms 1, 1'. The tracks 9, 10 are preferably slightly less in breadth than the diameter of the wire screw, so that the wire screw is firmly clamped.

Around at least a part of the wire screw 3 there is provided a housing 5, preferably a solid housing of synthetic material, e.g. self-lubricating plastic, with a through-going bore 6 and a downwardly-inclined, through-going slot 7 extending from the bore. The housing 5 controls the transport of the hanger 2 while this is disposed on the wire screw 3, and the housing 5 also supports the wire screw.

As shown in the drawing, the housing 5 has an inclined surface or recess 8 where the hanger 2 is fed in on the wire screw 3, and a further inclined surface or recess 12 where the hanger is fed from the wire screw onto the conveyor worm 1'. The direction of the inclined surfaces 8, 12 in relation to the transport direction is determined by the way in which the hanger hook is disposed on the conveyor.

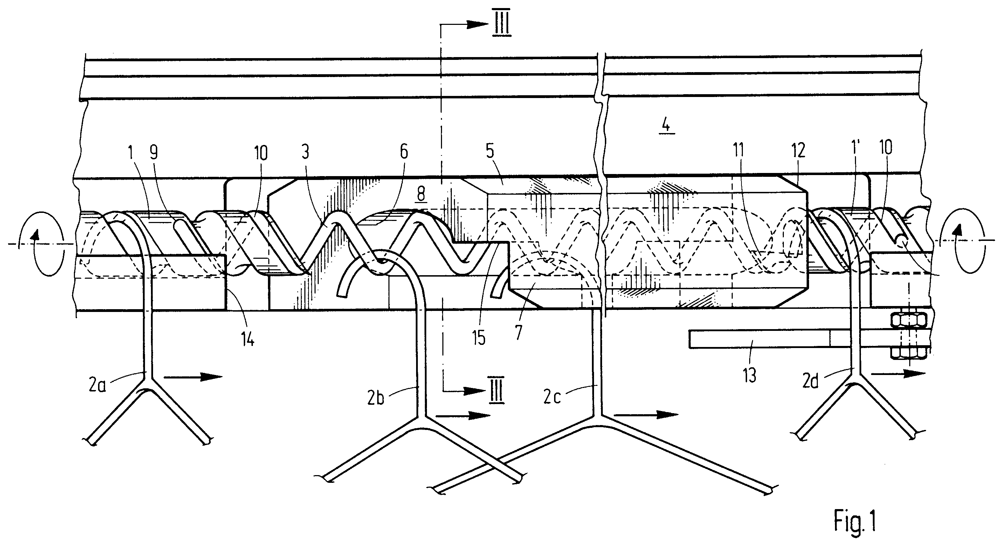

As will be seen in fig. 1, the housing 5 has a recess 15 at that end at which the hanger is led in on the wire screw 3. This is to ensure that there is room for the hanger hook during its introduction, and before this has been completely turned to its longitudinal position.

At that place where the hanger 2 is transferred from the wire screw 3 to the conveyor worm 1', the latter is provided with a gripping edge 11 to ensure that the hanger is transported further in a smooth and continuous manner.

Under the conveyor there is provided an inclined guide rail 13 which contributes towards turning the hanger 2 back to its transverse position in an easy and unhindered manner for further transport on the conveyor 1'.

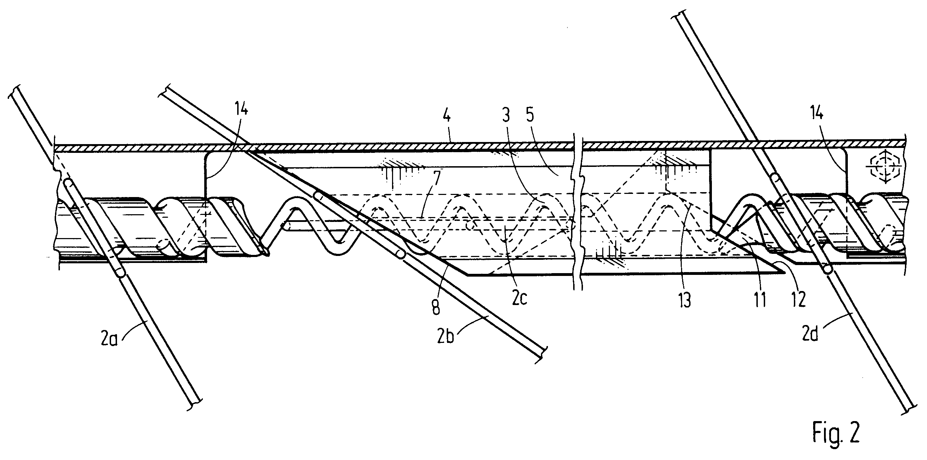

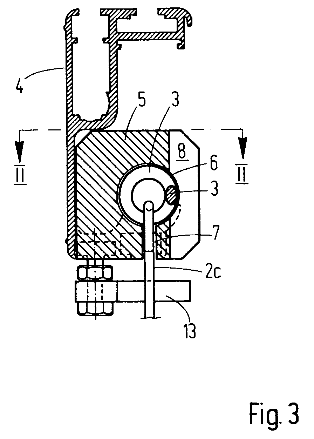

All of the parts are disposed on a common, longitudinal profiled rail 4, see especially fig. 3, in which there is provided a suitable cutout 14, see figs. 1 and 2, so that there is room for the housing 5, and such that there is room for the hanger hook, the downwardly-turning vertical part of which becomes displaced slightly sideways while the hanger is in the longitudinal position.

The turning of the hanger-suspended clothing is effected as follows. When a hanger 2a with clothing is led in on the wire screw 3, the shape of the housing 5 will force the hanger hook to turn approx. 90°, which is possible because on the wire screw 3 there is room for the hanger hook between the turns of the screw, see the hanger 2b, 2c. The hanger is now swung from the normal transverse position 2a to the longitudinal position 2c via position 2b, and is thus positioned for as long as the hanger hook remains in the slot 7 in the housing 5, see also figs. 2 and 3.

The hanger 2c is thus transported in the longitudinal position for the time that it is within the slot 7, i.e. the hanger-suspended clothing is now positioned longitudinally in relation to the direction of transport for the scanning or the reading of the identification mark or the like. The length of time for which the clothing is positioned longitudinally will depend on the length of the housing 5 which, for example, is 0.5 - 2.0 m long. For most applications, a housing 5 approx. 1m in length will be sufficient to ensure that a sure and precise reading is obtained, in that it is possible to place possible scanning elements relatively close to the clothing, since this is positioned longitudinally and is conveyed calmly and smoothly in the transport direction.

When the hanger leaves the slot 7, it can again be turned to the transverse position 2d for further transport, for which purpose an inclined guide rail 13 is provided under the conveyor and can contribute towards the hanger-suspended clothing being further transported smoothly and evenly on the conveyor 1'in the transverse position.

## Claims

1. Conveyor for items hung on a hook, e.g. wire hanger, and comprising at least one rotatable conveyor worm (1, 1') on which the hangers (2a, 2b, 2c, 2d) are in engagement with the thread of the conveyor worm, **characterized** in that a section of the conveyor worm is replaced by at least one wire-formed screw or spiral (3), and in that means (5, 13) are provided for controlling the direction of the hanger.

2. Conveyor according to claim 1, **characterized** in that a wire-formed screw or spiral (3) is inserted between two free ends of a conveyor worm (1, 1').

3. Conveyor according to claim 2, **characterized** in that at least one of the conveyor worms (1') has a gripping edge (11) for the transfer of hangers from the wire-formed screw or spiral (3) to the conveyor worm (1').

4. Conveyor according to claim 1 or 2, **characterized** in that the means for controlling the hangers (2a-2d) comprise a housing (5) with a through-going bore (6), in that said housing surrounds the wire-formed screw or spiral (3) and has a downwardly-facing, through-going slot 7.

5. Conveyor according to claim 4, **characterized** in that at least one end of the housing has an inclined surface (8, 12) in which the through-going bore (6) opens out.

6. Conveyor according to claim 1 or 2, **characterized** in that the means for controlling the hangers (2a-2d) comprise at least one guide rail (13) disposed under the conveyor.

7. Conveyor according to any of the claims 1-6, **characterized** in that all parts, i.e. both the conveyor worm(s) (1, 1') with wire-formed screw or spiral (3) and the means (5, 13) for controlling the direction of the hanger, are disposed in a longitudinal profile rail (4) in which there is provided at least one recess for the means for controlling the direction of the hanger.

8. Conveyor according to claim 1 or 2, **characterized** in that the wire-formed screw or spiral (3) is wound with stainless steel or spring steel, and is in firm engagement with the conveyor worm(s) (1, 1').

9. The use of the conveyor according to any of the claims 1-8 for the transport of hanger-suspended clothing, especially hanger-suspended clothing in a laundry or a dry-cleaning establishment.
